# EUROPEAN PATENT APPLICATION

(11) **EP 2 073 586 A2**
(43) Date of publication of application: **24.06.2009**
(21) Application number: 08171676.3
(22) Date of filing: 15.12.2008
(51) Int. Cl.: H04W 16/14

(54) **Spectrum Allocation in wireless communications systems**

(30) Priority: 21.12.2007 GB 0725047
(71) Applicant: Fujitsu Ltd., Kawasaki-shi, Kanagawa 211-8588 (JP)
(72) Inventor: Abedi, Saied, Reading,, Berkshire RG1 4LY (GB); Vadgama, Sunil Keshavji, Ashford,, Middlesex TW15 3RD (GB)
(74) Representative: Holtby, Christopher Lawrence

(57) **Abstract**

A method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
when a mobile communications apparatus is communicating with the first cell and is located in a spectrum-oriented handover region, the spectrum-oriented handover region being located at or near a boundary between the first and second cells of the first wireless communications system and having an area within the first cell, controlling the mobile communications apparatus so that it does not use the portion of spectrum currently re-assigned to the first cell, in order to reduce the possibility of communications between the mobile communications apparatus and the first cell causing interference in the said one or more cells of the third wireless communications system.

## Description

The invention relates to a method of, and apparatus for, reducing interference inflicted by a first wireless communications system on a second wireless communications system; and to a method of, and apparatus for, interacting with a first wireless communications system.

### Background

Recent studies indicate that, while some systems and mobile operators are in desperate need for more efficient use of spectrum resources, most of the radio spectrum resources remain underused most of the time. The increasing demand for flexible use of the radio spectrum for emerging new services and applications is the motivation behind numerous research activities worldwide. Efficient access to radio spectrum resources will generate new sources of revenues for worldwide vendors and wireless network operators. The new design of wireless radio infrastructure outlines the new attempts to share the spectrum in a fundamentally new fashion which may ultimately lead to better utilization of spectrum. The proposed spectrum management architectures and the spectrum sharing functionalities developed recently will result in a reduction in the time required to tailor a new service to an operator network. Furthermore, the flexible spectrum access and usage leads to more capable and faster services with higher Quality of Service (QoS) giving more user satisfaction than conventional networks.

Previously-considered spectrum management ideas involve four different levels of spectrum management techniques in three different time scales: Spectrum Sharing and Coexistence (a couple of hours or days), Long Term Spectrum Assignment (a couple of minutes), Short Term Spectrum Assignment (one second or tens of milliseconds) and fast dynamic spectrum allocation (10 ms time scale or even below). One of the most challenging scenarios for spectrum sharing is short term inter mode spectrum assignment in a hierarchical overlaid cellular network. Unlike the intra RAN (radio access network) spectrum sharing and exchange where adjacent cells are exchanging spectrum, in a hierarchical overlaid cellular network where the cells are no longer adjacent and are overlapped, the Short Term and Long Term Spectrum Assignment is a challenging task. For example, in a situation involving Metropolitan Area (MA) cells with a Time Division Duplex (TDD) mode located within a Wide Area (WA) cell with a Frequency Division Duplex (FDD) mode, when an MA cell or base station is to assign a chunk of spectrum to a WA cell, since all the MA cells are surrounded by WA cells, any allocation of spectrum to WA cells would ultimately lead to severe interference to other MA cells. Therefore, special protocols and algorithms are required for an efficient short term spectrum assignment in a hierarchical overlaid cellular network.

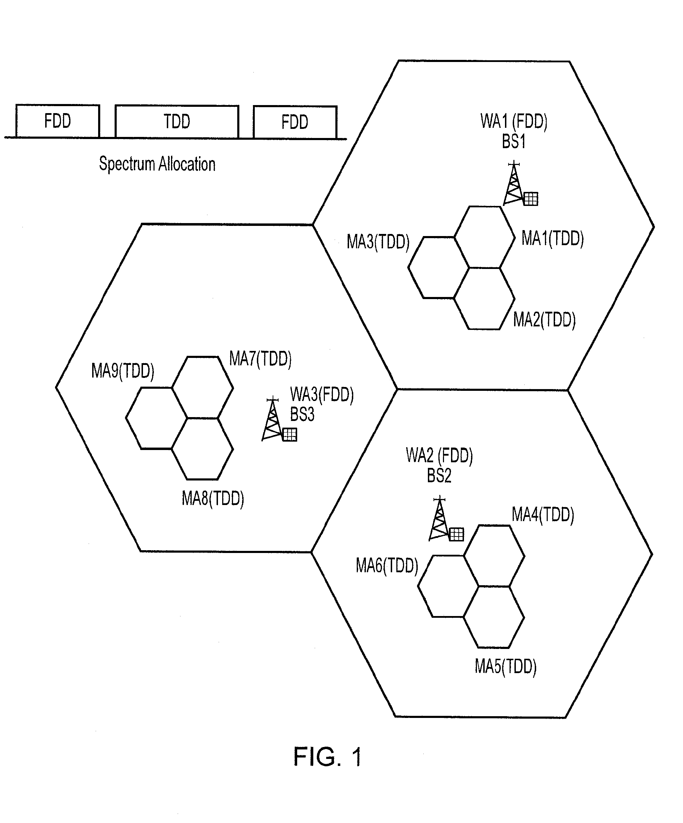

Figure 1 shows the overlaid hierarchical cell structure and the related spectrum assignment for TDD and FDD modes.

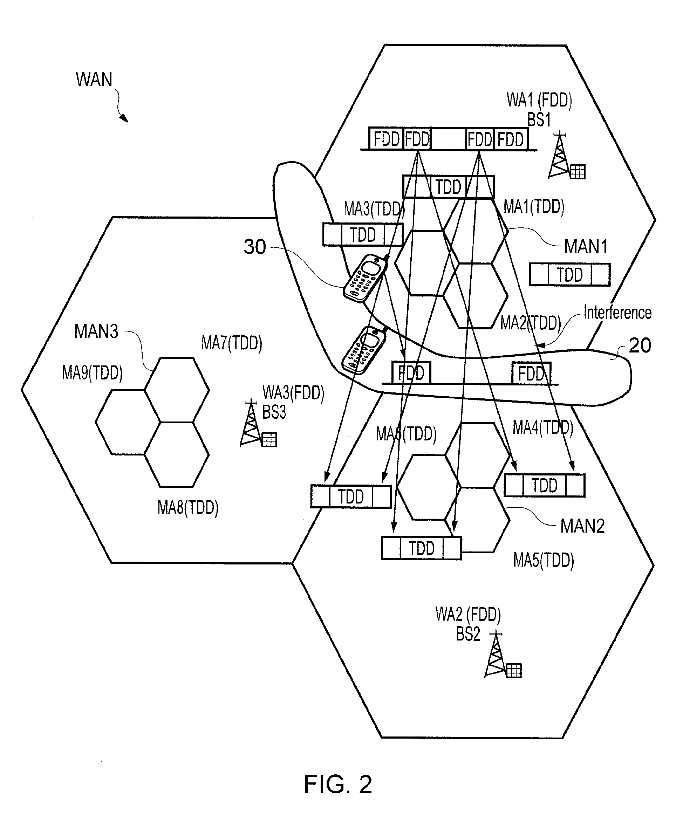

Figure 2 shows a situation in which spectrum assigned from cells MA1-3 to WA1 has caused a problem for MA cells of other MANs located in other WA cells, which MANs still operate within the same spectrum band in which cells MA1-3 operated before the assignment. The interference is indicated by arrows, which are shown passing from the portion of spectrum which has been assigned (from the cells MA1-3) to the cell WA1, to the equivalent portion of spectrum still in use by the cells MA4-6, in order to illustrate the interference. If the MA cells in the other WA cells are located far enough from cell WA1, the interference may not be critical. However if those MA cells are located close to cell WA1, as shown in Figure 2, then the interference caused by the high-power transmissions from cell WA1 following short term spectrum assignment may be severe.

### Summary

According to a first aspect, there is provided a method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
when a mobile communications apparatus is communicating with the first cell and is located in a spectrum-oriented handover region, the spectrum-oriented handover region being located at or near a boundary between the first and second cells of the first wireless communications system and having an area within the first cell, controlling the mobile communications apparatus so that it does not use the portion of spectrum currently re-assigned to the first cell, in order to reduce the possibility of communications between the mobile communications apparatus and the first cell causing interference in the said one or more cells of the third wireless communications system.

In this way, the invention may provide a method for spectrum-oriented handover which may alleviate some or all of the interference problems described above. In particular, the invention addresses the problem described above of the impact of transmissions from/to cell WA1 on the cells MA4-6 and/or MA7-9. It is assumed, for the purposes of the present disclosure, that, when one of the cells MA1-3 assigns a portion of spectrum to the cell WA1, each of the other cells MA1-3 also gives away that same portion of spectrum. In other words, decisions to assign portions of spectrum are made on a collective basis amongst the cells of a network. The spectrum-oriented handover region may provide an alternative for the exclusion zone, and/or may be used in addition to an exclusion zone.

The invention may provide benefits for network operators. For example, the invention may improve the revenue for the borrowing party by making sure that the wireless resource is available when needed in peak times, and may provide an extra source of income for operators as the lending party by making sure that the redundant spectrum is not wasted and can be employed in an efficient way.

The technical solution provided by the invention may improve the way spectrum is being managed in current legacy networks, and reduce the time required to tailor new services to network operators. On a cooperative basis, the invention opens the way for a much better flexible exploitation of radio spectrum resources in a wireless network while significantly improving the spectrum efficiency and availability. The invention may help short term spectrum assignment to become more feasible when, in hierarchical cellular structures, cells are tightly located. The invention may provide further fine tuning, improvement and flexibility to long term and short term spectrum assignment, improving the QoS and SIR (signal-to-interference ratio), as well as the overall network coverage and throughput. The invention may reduce the potential for call blockage by providing better and more efficient access to more radio resources. The spectrum-oriented handover region may considered as a kind of "protection zone" scheme operating within the radio access network. Micro-cells suffering interference may talk to adjacent macro-cells to expand the protection zone in the form of the spectrum-oriented handover region.

The invention may make a gradual migration to new spectral deployments possible, available to all the RANs involved, leading to growth in number of subscribers and traffic. The invention may provide flexibility towards geographical differences in regulatory spectrum assignments, and versatile operation of networks, e.g. due to differences in business models. Suitable adaptation of the spectrum available to a network may be possible according to the changes in the network load. These changes may be caused by changes on the market shares, or by daily variations on traffic. A diverse range of terminal classes, services and applications may become feasible and available to operators.

The spectrum assignment process may comprise the re-assignment of a portion of a spectrum band which was pre-assigned to at least one cell of one of the first and second wireless communications systems from that cell to at least one cell of the other of the first and second wireless communications systems. In other words, where a first spectrum band has been pre-assigned to a cell of the first wireless communications system, and a second spectrum band has been pre-assigned to a cell of the second wireless communications system, the spectrum assignment process may comprise (for example during negotiations between the first and second wireless communications systems) re-assigning, from one of the said cells to the other of the said cells, some or all of the respective first or second pre-assigned spectrum band. By "pre-assigned" it may be meant that the wireless communications system or cell to which the spectrum band has been pre-assigned is licensed for operation within that spectrum band.

By "spectrum" there may be meant radio frequencies or any other range of frequencies of electromagnetic radiation suitable for communication. For example, the first and second wireless communications systems may be radio access networks (RANs) operating within the radio frequency range of the electromagnetic spectrum. Additionally or alternatively, the wireless communications systems may operate within a microwave frequency range, for example.

The term "wireless communications system" may relate to a wireless access network, for example a radio access network (RAN), including all of the elements of the network, for example base stations. Additionally or alternatively, it may relate to communications apparatus, for example a network element, e.g. a base station. It may relate to an RFID tag reader, or to a group of such readers forming a network, possibly including other equipment, e.g. control circuitry. In one arrangement, the first wireless communications system is a wide-area network (WAN), and each of the second and third wireless communications systems is a metropolitan-area network (MAN).

It may be the case that the first, second and third wireless communications systems are hierarchical overlaid networks. The term "hierarchical overlaid networks" may relate to the fact that a cell of one of the networks is wholly or partially within a cell of the other of the networks.

The term "mobile communications apparatus" may relate to wireless equipment which is capable of undertaking wireless communications with one or more of the wireless communications systems. For example, the term may relate to user equipment, for example a mobile telephone, personal digital assistant, laptop or PC, or to an RFID tag.

Controlling the mobile communications apparatus so that it does not use the portion of spectrum currently re-assigned to the first cell may comprise controlling the mobile communications apparatus so that it uses any further portion of spectrum which is less likely to result in interference being inflicted on the said one or more cells of the third wireless communications system. It may be the case that the further portion of spectrum was pre-assigned to the first cell and is not currently re-assigned. In this case, controlling the mobile communications apparatus located within the spectrum-oriented handover region may comprise changing the spectrum within which the first cell and the mobile communications apparatus communicate from the portion of spectrum currently re-assigned to the first cell to a portion of spectrum which was pre-assigned to the first cell. Additionally or alternatively, it may be the case that the further portion of spectrum was pre-assigned to a fourth wireless communications system and is currently re-assigned to the first cell as part of the spectrum assignment process.

Changing the spectrum may comprise handing over the mobile communications apparatus to the second cell, the second cell operating within the portion of spectrum which was pre-assigned to the first cell. Handing over may comprise effecting a soft handover.

The spectrum-oriented handover region may be located in any area such that the mobile communications apparatus, when moving towards the third wireless communications system, is controlled so as to stop using the portion spectrum currently re-assigned to the first cell before it comes close enough to the third wireless communications system to cause significant interference problems (by communicating using the said portion of spectrum). In other words, the spectrum-oriented handover region may be positioned such that the mobile communications apparatus is prevented from using the said portion of spectrum before/when the level of interference that its communications with the first cell (using the said portion of spectrum) are inflicting on the third wireless communications system reaches a predetermined threshold. Many factors may affect the interference (and consequently the positioning of the handover region). These may include: (i) the nature of sectorisation within the cell; (ii) the power control scheme employed; (iii) the nature of traffic being handled by each base station at any point in time; (iv) the number of active subscribers assigned to each base station at any point in time; (v) any smart antenna schemes employed; and (vi) the direction of antenna beams. For example, the spectrum-oriented handover region may be located along a boundary between the first and second cells of the first wireless communications system. In one arrangement, the handover region may be located in the proximity of at least part of a boundary of the first cell. This may comprise defining the handover region to be located in an area in which the first cell abuts the second cell. E.g. the handover region may be located roughly along the boundary between two WA cells. The handover region may extend into the first cell so as to have an area within the first cell, so that the mobile communications apparatus can be controlled so as not to use the said portion of spectrum before the mobile communications apparatus gets close enough to the third wireless communications system to cause significant interference problems. The handover region may be located on either or both sides of a boundary between WA cells, or it could be located entirely within a WA cell (e.g. cell WA1), depending on how far the third wireless communication system is away from the first cell, and the severity of the interference.

The method of the first aspect may be performed by any suitable apparatus, in particular one or both of the first wireless communications system and the mobile communications apparatus. In the case that the method is performed by the first wireless communications system, that system may ask (i.e. control) the mobile communications apparatus to stop communications using the said portion of spectrum (and perhaps also to switch to a new portion of spectrum, as described). In the case that the method is performed by the mobile communications apparatus, the mobile communications may switch to a new portion of spectrum autonomously based on knowledge of its position (e.g. using GPS) and knowledge of the location of the handover region. In any case, the mobile communications apparatus may signal (e.g. through a control channel) to the first wireless communications system to inform it of successful switching to a new spectrum portion.

According to a second aspect, there is provided a method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
storing the location of a spectrum-oriented handover region located at or near a boundary between the first and second cells of the first wireless communications system, the spectrum-oriented handover region having an area within the first cell, in which spectrum-oriented handover region a mobile communications apparatus communicating with the first cell is controlled so that it does not use the portion of spectrum currently re-assigned to the first cell, in order to reduce the possibility of communications between the mobile communications apparatus and the first cell causing interference in the said one or more cells of the third wireless communications system.

The method of the second aspect may comprise any of the features of the method of the first aspect.

The method of any aspect may comprise dynamically varying the size of the spectrum-oriented handover region in the first cell in dependence on a level of interference in the said one or more cells in the third wireless communications system, the interference caused at least partially by communications between the mobile communications apparatus and the first cell using the portion of spectrum currently re-assigned to the first cell. In this way, there may be provided a tuning method to adjust the size of the spectrum-controlled handover region. Dynamically varying the size (e.g. the area) of the handover region may comprise increasing the size of the handover region in response to an increase in the level of interference and reducing the size of the handover region in response to a decrease in the level of interference.

The method of any aspect may comprise any suitable means of dynamically varying the size of the handover region in dependence on the level of interference. For example, the method may comprise storing a predefined mapping table of the level of interference against the size (and/or other attributes) of the spectrum-oriented handover region, and using the mapping table to vary the size of the spectrum-oriented handover region in dependence on the level of interference. Additionally or alternatively, the method may comprise varying the size (and/or other attributes) of the handover region using an algorithm. The algorithm may be based on the factors mentioned above with reference to the positioning of the handover region, for example.

In addition to varying the size of the spectrum-oriented handover region, the method may comprise dynamically varying other attributes of the handover region in dependence on the level of interference inflicted on the third wireless communications system. The attributes may comprise, for example, a shape and/or a location of the handover region. In one arrangement, the method comprises dynamically varying a location of the handover region in dependence on the level of interference inflicted on the second network element. For example, dynamically varying the location of the handover region may comprise moving the handover region closer to a network element of the first cell (and/or further away from the said one or more cells of the third wireless communications system) in response to an increase in the level of interference and moving the handover region further away from the network element of the first cell (and/or closer to the said one or more cells of the third wireless communications system) in response to a decrease in the level of interference. In order to obtain information on the level of interference, the method may comprise receiving ( e.g. at the first cell) signalling (e.g. transmitted from the said one or more cells of the third wireless communications system) being indicative of the level of interference. One of the said cells of the third wireless communications system may be a lead network element in a group of network elements in the third wireless communications system.

The method of any aspect may comprise any suitable means of determining that the first cell is communicating with the mobile communications apparatus using the portion of spectrum which was pre-assigned to the said one or more cells of the second wireless communications system and which is currently re-assigned to at least the first cell as part of the spectrum assignment process.

The method of any aspect may comprise any suitable means of determining that the mobile communications apparatus is within the spectrum-oriented handover region. For example, the method may use existing technology for determining whether or not a mobile communications apparatus is within a particular cell of a cellular network(e.g. a WAN or MAN), e.g. GPS and/or received signal strength technologies. This may be done in a similar way to that in which user equipment in a legacy system registers to a TDD cell when it moves inside a metropolitan-area cell from the surrounding WA network. In one arrangement, the method may comprise determining that the signal strength of communications between the first cell and the mobile communications apparatus has dropped below a predetermined amount of time, and thus it is determined that the mobile communications apparatus is within the spectrum-oriented handover region.

In addition to controlling the mobile communications apparatus so as not to use the said portion of spectrum, as described, the method may also include effecting handover from the first cell to the second cell or to another cell (of the first wireless communications or of another wireless communications system) following the controlling of the mobile communications apparatus (and/or the spectrum changing). The handover may be soft handover or hard handover. By "handover" there may be meant the same thing as "handoff'. For handover from a wide-area cell to a metropolitan-area cell, existing procedures may be used in which multiple thresholds are assigned to make a proper handover decision between the WA and MA cells. The direction of movement and current location of user equipment may be used to decide which cell the user-equipment is handed over to. The actual handover may take place after the adjustment of spectrum as described above. As an example, UMTS or LTE handover processes may be used. It should be noted that the control of the mobile communications apparatus described above is preferred regardless of the direction of movement of the mobile communications apparatus and the determination of to which cell the mobile communications apparatus is being handed over.

It may be useful to inform relevant parties of attributes of the handover region. In one arrangement, the method comprises transmitting (e.g. from the first cell) signalling being indicative of attributes (e.g. the size) of the handover region. The signalling may be transmitted to the mobile communications apparatus, for example, and/or to the third wireless communications system, or to any other party. For example, the attributes may include the size of the handover region.

According to a third aspect, there is provided apparatus for reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the apparatus comprising
control circuitry configured, when a mobile communications apparatus is communicating with the first cell and is located in a spectrum-oriented handover region, the spectrum-oriented handover region being located at or near a boundary between the first and second cells of the first wireless communications system and having an area within the first cell, to control the mobile communications apparatus so that it does not use the portion of spectrum currently re-assigned to the first cell, in order to reduce the possibility of communications between the mobile communications apparatus and the first cell causing interference in the said one or more cells of the third wireless communications system.

The control circuitry may be configured to control the mobile communications apparatus located within the spectrum-oriented handover region by changing the spectrum within which the first cell and the mobile communications apparatus communicate from the portion of spectrum currently re-assigned to the first cell to the portion of spectrum which was pre-assigned to the first cell.

The spectrum-oriented handover circuitry may be configured to change the spectrum by handing over the mobile communications apparatus to the second cell, the second cell operating within the portion of spectrum which was pre-assigned to the first cell. The spectrum-oriented handover circuitry may be configured to effect a soft handover.

According to a fourth aspect, there is provided apparatus for reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the apparatus comprising
memory circuitry configured to store the location of a spectrum-oriented handover region located at or near a boundary between the first and second cells of the first wireless communications system, the spectrum-oriented handover region having an area within the first cell, in which spectrum-oriented handover region a mobile communications apparatus communicating with the first cell is controlled so that it does not use the portion of spectrum currently re-assigned to the first cell, in order to reduce the possibility of communications between the mobile communications apparatus and the first cell causing interference in the said one or more cells of the third wireless communications system.

The apparatus of the fourth aspect may comprise any of the features of the apparatus of the third aspect.

The apparatus of any aspect may comprise region-setting circuitry configured to vary dynamically attributes of the spectrum-oriented handover region in the first cell in dependence on a level of interference in the said one or more cells in the third wireless communications system, the interference caused at least partially by communications between the mobile communications apparatus and the first cell using the portion of spectrum currently re-assigned to the first cell.

The apparatus of any aspect may comprise mapping circuitry configured to store a predefined mapping table of the level of interference against the attributes of the spectrum-oriented handover region, and wherein the region-setting circuitry is configured to use the mapping table to vary the attributes of the spectrum-oriented handover region in dependence on the level of interference.

The region-setting circuitry may be configured to vary the size of the spectrum-oriented handover region.

The variation of the size of the spectrum-oriented handover region may be performed by any one or more of the first wireless communications system (e.g. a WAN), the second or third wireless communications networks (which may be MANs), and external circuitry, which may be a handover region controller separate to any of the said networks.

In a fifth aspect, there is provided a method of interacting with a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
transmitting, from a cell which is assigned as a lead cell amongst a group of cells in the third wireless communications system, signalling being indicative of a level of interference inflicted on the group of cells by communications between the first cell and mobile communications apparatus using the said portion of spectrum.

In this way, the third wireless communications system may contribute to the determination of attributes of the handover region, as described above.

The method may comprise transmitting the signalling to the first wireless communications system, e.g. to the first cell. The signalling may be used by the first wireless communications system to determine attributes of the handover region, for example in the manner described above.

The method may include any suitable way of obtaining the level of interference. In one arrangement, the method comprises measuring the level of interference. In this regard, the method may comprise transmitting, from the lead cell, a request for measurements of the level of interference inflicted on each cell in the group of cells, and receiving signalling being indicative of the said measurements from the cells in the group of cells.

The method may comprise transmitting, from the lead cell, (e.g. to the other cells in the group of cells) a request for measurements of the level of interference inflicted on each cell in the group of cells, and receiving signalling being indicative of the said measurements from the cells in the group of cells.

The method may comprise (e.g. at the lead cell) calculating a difference between a measured level of interference and a threshold. The method may further comprise transmitting signalling being indicative of the difference, for example to the first wireless communications system, and in particular the first cell of the first wireless communications system.

The method of the fifth aspect may include transmitting, from the third wireless communication systems (e.g. from the lead cell), a request for a variation (e.g. an increase in size) of the attributes of the spectrum-oriented handover region. The request may be transmitted to the first wireless communication system for example, e.g. to one or both of the first and second cells.

The method may comprise selecting one of the cells in the group of cells as the lead cell. For example, the method may include selecting the cell which is closest to the problem area or the handover region as the lead cell. In another arrangement, the method may include selecting the cell which experiences the highest level of interference (in the direction of the spectrum-oriented handover region) as the lead cell.

In a sixth aspect, there is provided apparatus for interacting with a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the apparatus comprising
communications circuitry configured to transmit, from a cell which is assigned as a lead cell amongst a group of cells in the third wireless communications system, signalling being indicative of a level of interference inflicted on the group of cells by communications between the first cell and mobile communications apparatus using the said portion of spectrum.

The communications circuitry may be configured to transmit the signalling to the first wireless communications system, e.g. to the first cell.

The apparatus may comprise measurement circuitry configured to measure the level of interference. In this regard, the communications circuitry may be configured to transmit, from the lead cell, a request for measurements of the level of interference inflicted on each cell in the group of cells, and to receive signalling being indicative of the said measurements from the cells in the group of cells.

The communications circuitry may be configured to transmit, from the lead cell, (e.g. to the other cells in the group of cells) a request for measurements of the level of interference inflicted on each cell in the group of cells, and to receive signalling being indicative of the said measurements from the cells in the group of cells.

The apparatus may comprise (e.g. at the lead cell) calculation circuitry configured to calculate a difference between a measured level of interference and a threshold. The communications circuitry may be configured to transmit signalling being indicative of the difference, for example to the first wireless communications system, and in particular the first cell of the first wireless communications system.

The apparatus may comprise selection circuitry configured to select one of the cells in the group of cells as the lead cell.

In a seventh aspect, there is provided a computer program which, when run on a computer, causes the computer to perform the method of any one or more of the first, second or fifth aspects.

In an eighth aspect, there is provided a computer program which, when loaded into a computer, causes the computer to become the apparatus of any one or more of the third, fourth or sixth aspects.

In a ninth aspect, there is provided a computer program of the seventh or eighth aspect, carried by a carrier medium.

The carrier medium may be a recording medium, or a transmission medium.

In a tenth aspect, there is provided a computer program which, when executed on a computer, causes the computer to execute a method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
when a mobile communications apparatus is communicating with the first cell and is located in a spectrum-oriented handover region, the spectrum-oriented handover region being located at or near a boundary between the first and second cells of the first wireless communications system and having an area within the first cell, controlling the mobile communications apparatus so that it does not use the portion of spectrum currently re-assigned to the first cell, in order to reduce the possibility of communications between the mobile communications apparatus and the first cell causing interference in the said one or more cells of the third wireless communications system.

In an eleventh aspect, there is provided a computer program which, when executed on a computer, causes the computer to execute a method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
storing the location of a spectrum-oriented handover region located at or near a boundary between the first and second cells of the first wireless communications system, the spectrum-oriented handover region having an area within the first cell, in which spectrum-oriented handover region a mobile communications apparatus communicating with the first cell is controlled so that it does not use the portion of spectrum currently re-assigned to the first cell, in order to reduce the possibility of communications between the mobile communications apparatus and the first cell causing interference in the said one or more cells of the third wireless communications system.

In a twelfth aspect, there is provided a computer program which, when executed on a computer, causes the computer to execute a method of interacting with a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
transmitting, from a cell which is assigned as a lead cell amongst a group of cells in the third wireless communications system, signalling being indicative of a level of interference inflicted on the group of cells by communications between the first cell and mobile communications apparatus using the said portion of spectrum.

Any circuitry may include one or more processors, memories and bus lines. One or more of the circuitries described may share circuitry elements.

The present invention includes one or more aspects, embodiments or features in isolation or in various combinations whether or not specifically stated (including claimed) in that combination or in isolation.

The above summary is intended to be merely exemplary and non-limiting.

### Brief Description Of The Drawings

A description is now given, by way of example only, with reference to the accompanying drawings, in which:-
Figure 1 illustrates a hierarchical overlaid cellular network in which a spectrum assignment process takes place between first and second wireless communications systems respectively using FDD and TDD modes;
Figure 2 illustrates an interference problem which may occur in the hierarchical overlaid cellular network of Figure 1, and further shows a spectrum-oriented handover region;
Figure 3 illustrates in more detail a figure representing a spectrum assignment shown in Figure 2;
Figure 4 illustrates a base station of a cell of a wide-area network informing user equipment of a new size of the spectrum-oriented handover region;
Figure 5 illustrates signalling which may take place in a method of spectrum-orientated handover;
Figure 6 is a flowchart representing a method of reducing interference;
Figure 7 is a flowchart representing a method of reducing interference;
Figure 8 is a flowchart representing a method of interacting with a first wireless communications system.

### Detailed Description

Figure 2 shows a spectrum assignment scenario involving a wide-area network (WAN) having cells WA1-3 with respective base stations BS1-3 operating in a frequency-division duplex (FDD) mode. A first metropolitan-area network MAN1 is located in cell WA1 of the WAN and has cells MA1-3 operating in a time-division duplex (TDD) mode. A second metropolitan-area network MAN2 is located in cell WA2 of the WAN and has cells MA4-6 operating in a TDD mode. A third metropolitan-area network MAN3 is located in cell WA3 of the WAN and has cells MA7-9 operating in a TDD mode.

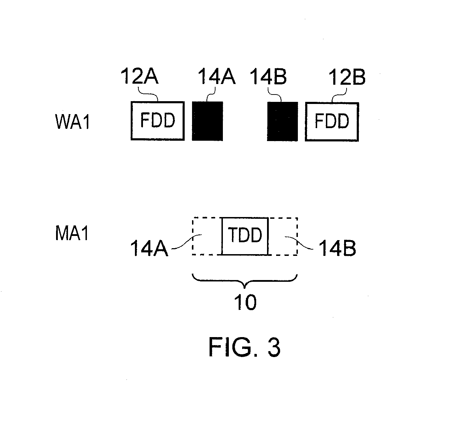

The WAN is operable in use to take part in a spectrum assignment process involving the WAN and any one or more of MAN1-3. For example, Figure 3 shows an example of the spectrum bands in which the wide-area and metropolitan-area networks may operate following such a spectrum assignment process. In this example, each cell MA1-9 of the metropolitan-area networks MAN1-3 has a pre-assigned spectrum band 10, and cells WA1-3 have a pre-assigned spectrum band 12 (which consists of two parts, 12A and 12B, shown in Figure 3). A portion 14 (which consists of two parts, 14A and 14B) of the spectrum band 10, shown in Figure 3, has been re-assigned from the cells MA1-3 to cell WA1 in the spectrum assignment process.

In order to alleviate the interference problems described above, a spectrum-oriented handover region 20 (shown in Figure 2) is located between the base station BS1 and the cells MA4-9 of the second and third metropolitan-area networks MAN2-3. More specifically, the spectrum-oriented handover region 20 is located along a boundary between the cell WA1 and the cell WA2, and also along a boundary between the cell WA1 and the cell WA3. The handover region 20 extends into the cell WA1 and has an area within the cell WA1.

The spectrum-oriented handover region 20 indicates that a mobile communications apparatus 30 located in the spectrum-oriented handover region 20 and communicating with the cell WA1 should be controlled so that it does not use the portion of spectrum 14 currently re-assigned to the cell WA1, in order to reduce the possibility of communications between the mobile communications apparatus 30 and the cell WA1 causing interference in the cells MA4-6 of the second metropolitan-area network MAN2. In this arrangement, in the case that the mobile communications apparatus 30 is turned on whilst within the spectrum-oriented handover region 20, the mobile communications apparatus 30 may be controlled so as to use the portion of spectrum 12 which was pre-assigned to the cell WA1 upon initialisation of the mobile communications apparatus 30. Also in this arrangement, in the case that the mobile communications apparatus 30 moves into the spectrum-oriented handover region 20 (from the cell WA1) during communications with the cell WA1, as shown in Figure 2, the mobile communications apparatus 30 may be controlled so as to change the spectrum within which the cell WA1 and the mobile communications apparatus 30 communicate from the portion of spectrum 14 currently re-assigned to the cell WA1 to the portion of spectrum 12 which was pre-assigned to the cell WA1. As MAN2 and MAN3 are still operating in the full spectrum portion 10, without having re-assigned the spectrum portion 14 to WA1, any use of the spectrum portion 14 by the mobile communications apparatus 30 in the vicinity of MAN2 and MAN3 has the potential to result in problematic interference being inflicted on those networks. Through the use of the spectrum-oriented handover region 20, as described, the mobile communications apparatus 30 is controlled to operate within the spectrum portion 12, which does not cause interference problems for MAN2 and MAN3, before it reaches the boundary between WA1 and either WA2 or WA3. This is because the handover region 20 extends into the cell WA1. Thus, the possibility for problematic interference is reduced.

It is useful that, after the mobile communications apparatus is switched over to the spectrum portion 12, and after handover to one of cells WA2 and WA3, the cell WA2 or WA3 also operates within the spectrum portion 12 (and in particular that it does not operate in the spectrum band 14). In fact, the network may permit only one spectrum negotiation to occur at any one time (i.e. preventing simultaneous assignments involving WA1-3). Furthermore, it is useful that WA1 is aware of the situation regarding WA2 and WA3, and that WA1 informs the network of any assignments such that WA2 and WA3 are made aware of the spectrum assignments. For example, if WA2 has already borrowed a chunk of spectrum from say MA4-6, WA1 would avoid any overlap with that assigned chunk. Even if WA1 borrows a different sub-chunk from say MA1-3, the mobile communications apparatus can still switch to the spectrum portion 12 and thereby reduce interference.

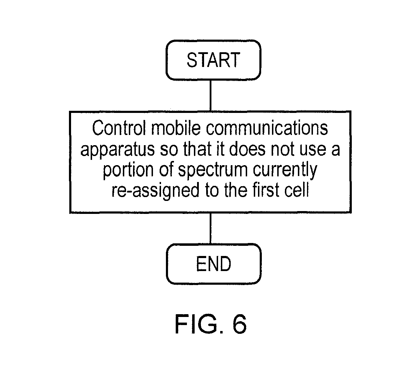

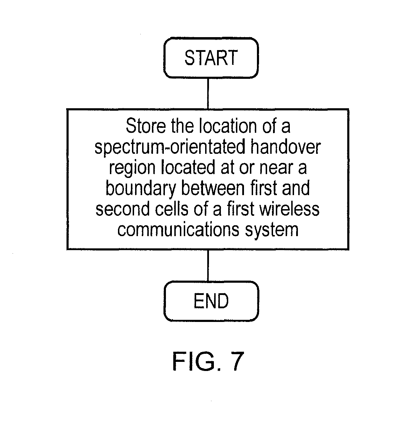

In this arrangement, the cell WA1 includes control circuitry (not shown) configured to control the mobile communications apparatus 30 in the manner described above (see Figure 6). The control circuitry operates to detect that the mobile communications apparatus 30 is within the spectrum-oriented handover region 20, which may be done using GPS and/or received signal strength measurements in the known way, which may involve communications between the control circuitry and the mobile communications apparatus 30. The control circuitry stores the location of the spectrum-oriented handover region 20 (see Figure 7). In response to the detection, the control circuitry signals to the mobile communications apparatus 30 to ask the mobile communications apparatus 30 to switch to the portion of spectrum 12 which was pre-assigned to the cell WA1, as described above. In another arrangement, the control circuitry forms part of the mobile communications apparatus 30 and, based on knowledge of its position and knowledge of the location of the spectrum-oriented handover region 20, the control circuitry switches the mobile communications apparatus 30 to the portion of spectrum 12.

In addition to the control circuitry, in this arrangement, the cell WA1 includes region-setting circuitry (not shown) configured dynamically to vary the size of the spectrum-oriented handover region 20 in the cell WA1 in dependence on a level of interference in one or more of the cells MA4-6 in the second metropolitan-area network MAN2, and/or in one or more of the cells MA7-9 of the third metropolitan-area network, the interference caused by communications between the mobile communications apparatus 30 and the cell WA1 using the portion of spectrum 14 currently re-assigned to the cell WA1. The cell WA1 also includes mapping circuitry (not shown) configured to store a predefined mapping table of the level of interference against the size of the spectrum-oriented handover region 20. The region-setting circuitry is configured to use the mapping table to vary the size of the spectrum-oriented handover region 20 in dependence on the level of interference.

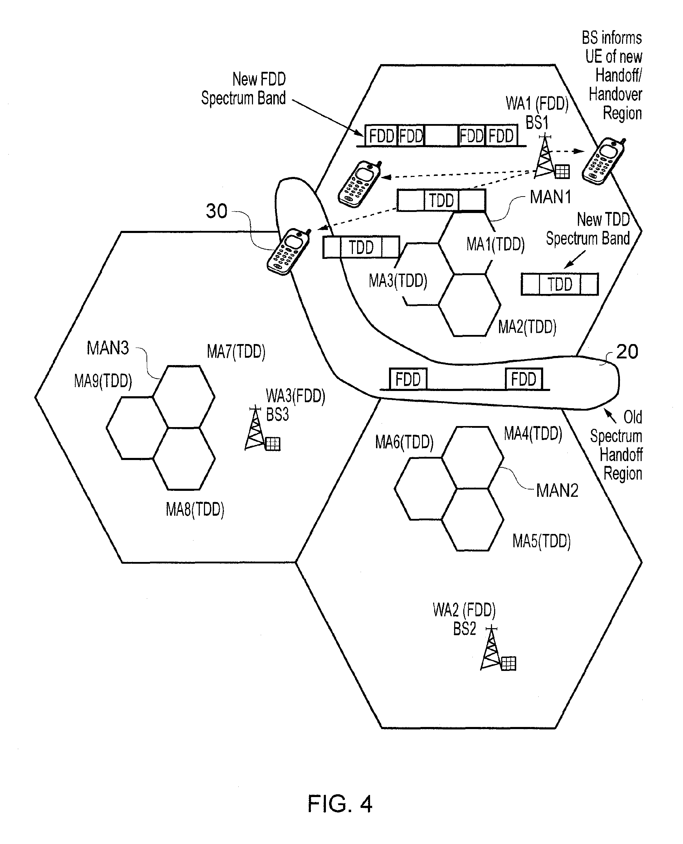

In order to obtain information on the level of interference, the control circuitry is configured to receive signalling being indicative of the level of interference, the signalling being received from one or both of MAN2 and MAN3, for example. The control circuitry is configured to transmit, once the size of the spectrum-oriented handover region 20 has been determined, signalling which is indicative of the area of the spectrum-oriented handover region 20, as shown in Figure 4. The signalling may be received by the mobile communications apparatus 30 or by MAN2 or MAN3.

In other arrangements, the control circuitry and/or the mapping circuitry form part of a metropolitan-area network, or external circuitry, such as a spectrum-oriented handover region controller (not shown).

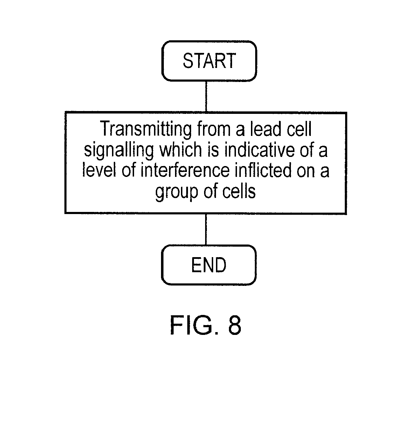

In the second metropolitan-area network MAN2, a leader cell is assigned to the cluster of affected cells (e.g. MA4-6 in Figure 2). The leader cell asks the other cells to measure the interference level at the portion of spectrum 14. The leader cell then measures the difference between the measured level of interference and a threshold, and reports the rise of interference level to the cell WA1 (see Figure 8), which then maps the interference level to a new size of the spectrum-oriented handover region 20, as described above. The cell WA1 then executes the new handover region size and informs the mobile communications apparatus 30, as shown in Figure 4, that the new area is valid from that point on.

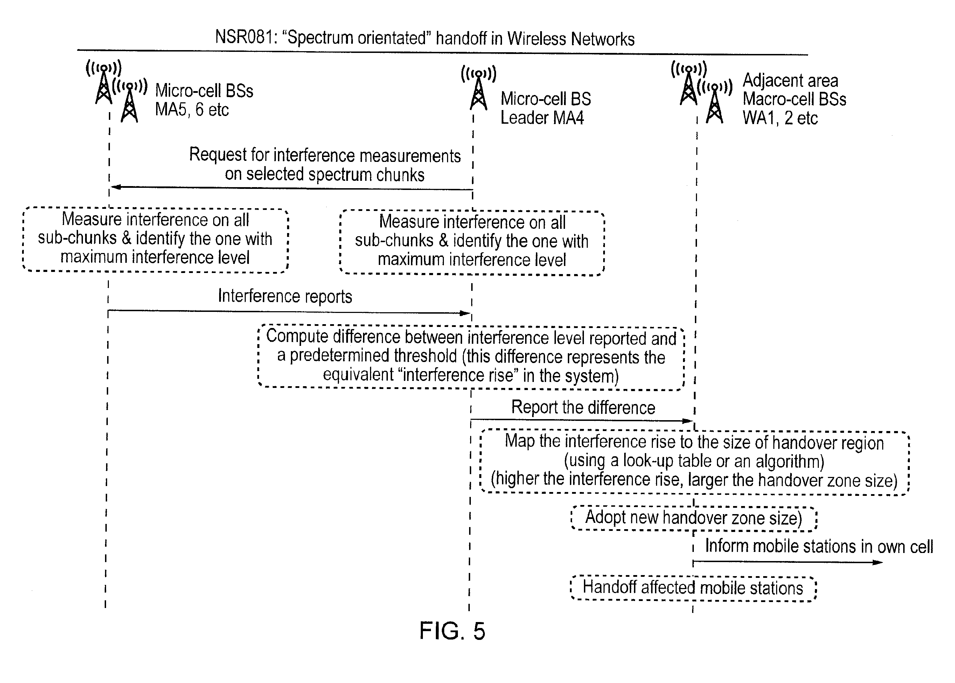

Figure 5 shows the signalling which takes place in one arrangement based on the scenario and apparatus described above. As shown, the leader cell (e.g. cell MA4) requests interference measurements in a selected spectrum chunk from the other cells in the cluster (e.g. cells MA5-6), which other cells then measure the interference in all sub-chunks and identify the one with the maximum interference level. At the same time, the leader cell measures the interference in all sub-chunks and identifies the one with the maximum interference level. The other cells then send interference reports to the leader cell. The leader cell computes the difference between the reported interference level and a predetermined threshold (the difference represents the interference rise in the system). The leader cell reports the difference to the adjacent area macro cell (e.g. cell WA1). That cell then maps the interference rise to the size of the handover region 20 (using a look-up table or an algorithm). The higher the interference rise, the larger the size of the handover region 20. The cell WA1 then adopts the new handover region size, and informs any mobile communications apparatus in that cell. The cell WA1 then hands over any affected mobile communications apparatus (as mentioned, the handover process may be a known process).

It should be noted that, although the invention has been described with reference to wide-are and metropolitan-area networks, the invention is applicable to other types of network, which may have non-overlapping cells. For example, the invention is application to RFID networks.

It will be appreciated that the aforementioned circuitry may have other functions in addition to the mentioned functions, and that these functions may be performed by the same circuit.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
when a mobile communications apparatus is communicating with the first cell and is located in a spectrum-oriented handover region, the spectrum-oriented handover region being located at or near a boundary between the first and second cells of the first wireless communications system and having an area within the first cell, controlling the mobile communications apparatus so that it does not use the portion of spectrum currently re-assigned to the first cell, in order to reduce the possibility of communications between the mobile communications apparatus and the first cell causing interference in the said one or more cells of the third wireless communications system.

2. The method of claim 1 wherein controlling the mobile communications apparatus located within the spectrum-oriented handover region comprises changing the spectrum within which the first cell and the mobile communications apparatus communicate from the portion of spectrum currently re-assigned to the first cell to a portion of spectrum which was pre-assigned to the first cell.

3. The method of claim 2 wherein changing the spectrum comprises handing over the mobile communications apparatus to the second cell, the second cell operating within the portion of spectrum which was pre-assigned to the first cell.

4. A method of reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
storing the location of a spectrum-oriented handover region located at or near a boundary between the first and second cells of the first wireless communications system, the spectrum-oriented handover region having an area within the first cell, in which spectrum-oriented handover region a mobile communications apparatus communicating with the first cell is controlled so that it does not use the portion of spectrum currently re-assigned to the first cell, in order to reduce the possibility of communications between the mobile communications apparatus and the first cell causing interference in the said one or more cells of the third wireless communications system.

5. The method of any preceding claim comprising dynamically varying attributes of the spectrum-oriented handover region in the first cell in dependence on a level of interference in the said one or more cells in the third wireless communications system, the interference caused at least partially by communications between the mobile communications apparatus and the first cell using the portion of spectrum currently re-assigned to the first cell.

6. The method of claim 5 comprising storing a predefined mapping table of the level of interference against the attributes of the spectrum-oriented handover region, and using the mapping table to vary the attributes of the spectrum-oriented handover region in dependence on the level of interference.

7. Apparatus for reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum having being used also by one or more cells of the third wireless communications system, the apparatus comprising
control circuitry configured, when a mobile communications apparatus is communicating with the first cell and is located in a spectrum-oriented handover region, the spectrum-oriented handover region being located at or near a boundary between the first and second cells of the first wireless communications system and having an area within the first cell, to control the mobile communications apparatus so that it does not use the portion of spectrum currently re-assigned to the first cell, in order to reduce the possibility of communications between the mobile communications apparatus and the first cell causing interference in the said one or more cells of the third wireless communications system.

8. The apparatus of claim 7, wherein the control circuitry is configured to control the mobile communications apparatus located within the spectrum-oriented handover region by changing the spectrum within which the first cell and the mobile communications apparatus communicate from the portion of spectrum currently re-assigned to the first cell to a portion of spectrum which was pre-assigned to the first cell.

9. The apparatus of claim 8 wherein the spectrum-oriented handover circuitry is configured to change the spectrum by handing over the mobile communications apparatus to the second cell, the second cell operating within the portion of spectrum which was pre-assigned to the first cell.

10. Apparatus for reducing interference inflicted by a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the apparatus comprising
memory circuitry configured to store the location of a spectrum-oriented handover region located at or near a boundary between the first and second cells of the first wireless communications system, the spectrum-oriented handover region having an area within the first cell, in which spectrum-oriented handover region a mobile communications apparatus communicating with the first cell is controlled so that it does not use the portion of spectrum currently re-assigned to the first cell, in order to reduce the possibility of communications between the mobile communications apparatus and the first cell causing interference in the said one or more cells of the third wireless communications system.

11. The apparatus of any of claims 7 to 10 comprising region-setting circuitry configured to vary dynamically attributes of the spectrum-oriented handover region in the first cell in dependence on a level of interference in the said one or more cells in the third wireless communications system, the interference caused at least partially by communications between the mobile communications apparatus and the first cell using the portion of spectrum currently re-assigned to the first cell.

12. The apparatus of claim 11 comprising mapping circuitry configured to store a predefined mapping table of the level of interference against the attributes of the spectrum-oriented handover region, and wherein the region-setting circuitry is configured to use the mapping table to vary the attributes of the spectrum-oriented handover region in dependence on the level of interference.

13. A method of interacting with a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the method comprising
transmitting, from a cell which is assigned as a lead cell amongst a group of cells in the third wireless communications system, signalling being indicative of a level of interference inflicted on the group of cells by communications between the first cell and mobile communications apparatus using the said portion of spectrum.

14. Apparatus for interacting with a first wireless communications system in a geographical area including the first wireless communications system and second and third wireless communications systems, the first wireless communications system having at least first and second cells adjacent one another, at least part of the second wireless communications system being located within the first cell and at least part of the third wireless communications system being located within the second cell, the first cell having taken part in a spectrum assignment process, as a result of which a portion of spectrum which was pre-assigned to one or more cells of the second wireless communications system is currently re-assigned to the first cell, the said portion of spectrum being used also by one or more cells of the third wireless communications system, the apparatus comprising
communications circuitry configured to transmit, from a cell which is assigned as a lead cell amongst a group of cells in the third wireless communications system, signalling being indicative of a level of interference inflicted on the group of cells by communications between the first cell and mobile communications apparatus using the said portion of spectrum.

15. A computer program which, when executed on a computer, causes the computer to execute the method of any of claims 1-6 or 13.
